# FASCICULE DE BREVET EUROPEEN

(11) **EP 0 695 430 B1**
(45) Date de publication et mention de la délivrance du brevet: **28.07.1999**
(21) Numéro de dépôt: 94913562.8
(22) Date de dépôt: 09.04.1994
(51) Int. Cl.: G02B 6/44

(54) **INSTALLATION ET PROCEDE DE FABRICATION D'UN CABLE A FIBRE OPTIQUE**
INSTALLATION UND HERSTELLUNGSVERFAHREN FÜR EIN FASEROPTISCHES KABEL
FIBRE-OPTIC CABLE PRODUCTION METHOD AND APPARATUS

(30) Priorité: 14.04.1993 FR 9304491
(43) Date de publication de la demande: 07.02.1996
(73) Titulaire: Swisscab S.A., 1462 Yvonand (CH)
(72) Inventeur: KERTSCHER, Eberhard, CH-1462 Yvonand (CH)
(74) Mandataire: Patry, Didier Marcel Pierre
(86) Numéro de dépôt international: EP9401102
(87) Numéro de publication internationale: WO9424595

(56) Documents cités:
- EP-A- 0 185 615
- EP-A- 0 193 940
- EP-A- 0 275 994
- EP-A- 0 286 819
- DE-A- 3 027 743
- DE-A- 3 239 024
- FR-A- 2 280 911
- FR-A- 2 393 503
- FR-A- 2 509 275

## Description

La présente invention concerne un procédé ainsi qu'une installation pour la fabrication d'un câble à fibres optiques.

Les câbles à fibres optiques classiques comportent un ensemble de fibres assemblées entre elles sous forme de nappes, de fibres déjà câblées, ou de bandelettes, qui sont entourées par un premier tube extérieur, de structure rigide ou souple, réalisé par extrusion d'une matière synthétique.

Dans certaines applications, les fibres optiques sont logées de façon libre à l'intérieur du tube et une matière visqueuse, telle qu'une graisse de protection appelée sous la dénomination britannique "jelly" est injectée à l'intérieur du tube pour noyer lesdites fibres dans celui-ci.

La fabrication de ce type de câble est réalisée de telle sorte que les fibres à l'intérieur du tube présentent, par rapport à celui-ci, une surlongueur choisie, obtenue par l'influence et la combinaison de différents paramètres tout au long de la chaîne de fabrication.

Dans les procédés et les installations classiques actuellement utilisés, notamment celui décrit dans le document EP-A-0 275 994, les fibres optiques sont déroulées à partir d'un dévidoir comportant une bobine débitrice montée libre en rotation sur un axe, la tension de la fibre déroulée étant contrôlée pour rester constante.

Ces fibres sont ensuite tirées en aval au travers d'une tête d'extrusion où est amenée, autour desdites fibres, de la matière synthétique à haute température, sous forme visqueuse, pour former, de façon coaxiale et à l'extérieur des fibres, le tube de protection mentionné ci-avant.

A ce niveau, la graisse ou "jelly" est injectée pour remplir le tube et pour enrober les fibres optiques dans celui-ci.

Après cette étape d'extrusion, le tube en plastique est refroidi dans un premier bac de refroidissement, et il est sollicité en traction, en étant enroulé autour d'un premier retireur. Le procédé se poursuit par le passage du tube au travers d'un autre bac de refroidissement et au travers d'un autre retireur, avec un contrôle des tractions sur ce tube, par l'intermédiaire de jauges de contrainte.

Ce procédé et cette installation donnent satisfaction mais uniquement jusqu'à un diamètre limite du tube et jusqu'à un nombre limite de fibres à l'intérieur du tube. En effet, au-delà notamment d'un diamètre de tube de 6 mm, on constate l'apparition de défauts dans la forme extérieure du tube, mais aussi dans la surlongueur des fibres, ainsi que dans l'aspect de sa surface extérieure. Il est donc très difficile d'obtenir un tube présentant une surface extérieure lisse et la surlongueur devient aussi difficile à contrôler.

Ainsi, la présente invention a-t-elle pour but de fournir un procédé et une installation de fabrication d'un câble à fibres optiques, permettant de remédier à ces inconvénients et grâce auxquels l'aspect lisse et la forme circulaire du tube entourant les fibres peuvent être contrôlés, quel que soit le nombre de fibres à l'intérieur de celui-ci, tout en permettant par ailleurs un contrôle adéquat de la surlongueur sur ces fibres.

La présente invention a donc pour objet un procédé de fabrication d'un câble à fibres optiques du type comportant un tube dans lequel sont logées lesdites fibres, tel que défini à la revendication 1.

L'invention a en outre pour objet une installation pour la fabrication d'un câble à fibres optiques du type comportant un tube dans lequel sont logées lesdites fibres, tel que défini à la revendication 10.

Mais d'autres caractéristiques et avantages de l'invention apparaîtront à la lecture de la description détaillée qui suit, faite en référence aux dessins annexés qui sont donnés uniquement à titre d'exemple et dans lesquels :
- La figure 1 est une vue schématique et en élévation d'une installation de fabrication d'un câble à fibres optiques, selon l'invention,
- la figure 2 est une vue en coupe longitudinale d'une tête d'extrusion et d'un conformateur de l'installation de la figure 1, et
- les figure 3a et 3b sont des vues en coupe transversale de deux câbles à fibres optiques obtenus par le procédé et l'installation selon l'invention.

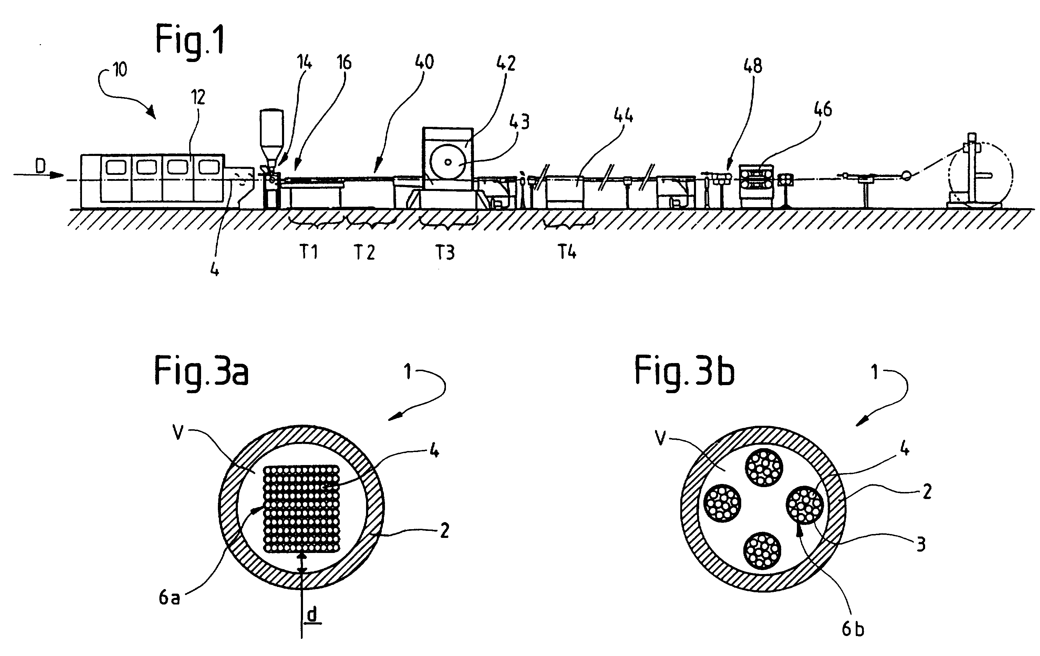

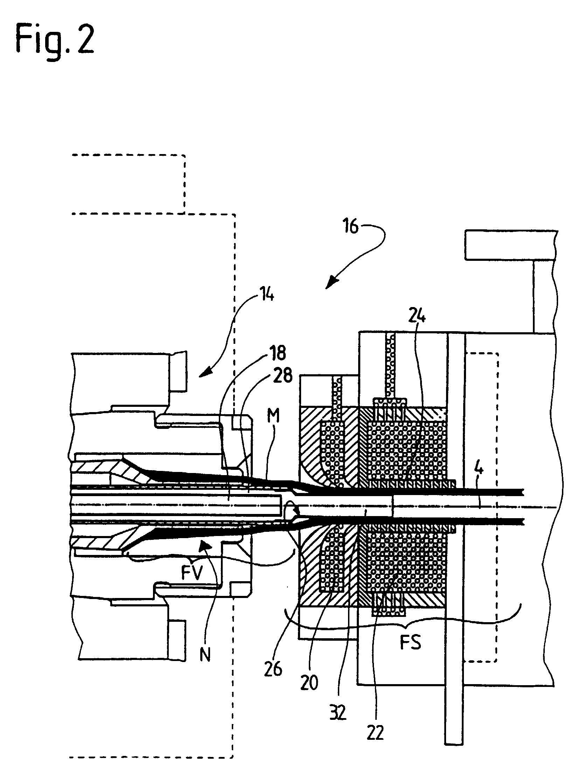

En se référant tout d'abord aux figures 3a et 3b, on décrira ci-après deux câbles à fibres optiques selon deux modes de réalisation, obtenus par le procédé et par l'installation selon l'invention, qui seront décrits de façon plus détaillée ci-après.

Ces câbles qui sont repérés ici par la référence générale 1, comportent chacun un tube extérieur extrudé 2 réalisé en une matière synthétique souple ou de préférence rigide, telle qu'en polyamide, en polybutylène terephthalate ou en polypropylène. A l'intérieur du tube 2 qui, comme on le voit sur la figure 3, présente une forme en coupe circulaire, sont logées un certain nombre de fibres optiques 4 (une seule étant ici référencée) assemblées entre elles sous la forme de nappes ou bandelettes 6a, selon le mode de réalisation de la figure 3a. Comme on le voit sur cette figure, les nappes ou bandelettes 6a sont maintenues, par rapport au tube extérieur 2, à une distance radiale d de celui-ci, si bien que les nappes ou bandelettes 6a ne touchent pas la paroi intérieure du tube 2.

Conformément au mode de réalisation de la figure 3b, les fibres optiques 4 sont regroupées entre elles selon quatre faisceaux ou câbles 6b respectivement maintenus et entourés d'un tube de maintien 3. Chaque faisceau 6b, et notamment son tube de maintien 3 est disposé à une distance d du tube extérieur 2 dans lequel est injecté la graisse ou "jelly" V. L'invention n'est bien entendu pas limitée à l'obtention des câbles selon les figures 3a et 3b qui sont représentés ici à titre d'exemple.

Une matière visqueuse V, telle qu'une graisse de protection appelée généralement sous la dénomination britannique "jelly" est injectée à l'intérieur du tube 2 pour remplir l'espace libre laissé entre le tube 2 et les nappes ou bandelettes de fibres optiques, référencées 6a, ou les faisceaux câblés 6b.

En se référant désormais à la figure 1, on décrira ci-après une installation pour la fabrication du câble 1, conforme à l'invention, cette installation étant repérée par la référence générale 10.

Dans la suite de la description, les termes "amont" et "aval" seront utilisés en référence au sens de défilement des fibres optiques 4, et plus généralement en référence au sens de défilement du câble 1 dans l'installation 10, conformément à la flèche D.

En outre, le terme "fibres optiques" accompagné de la référence 4 sera utilisé pour qualifier indifférement la forme des fibres en bandelette, référencée 6a ou la forme en faisceau déjà gainé, référencée 6b, et cela pour faciliter la suite de la description.

En amont de l'installation 10, sont disposés des moyens dévidoirs 12 qui comportent plusieurs bobines débitrices (non représentées) sur lesquelles sont enroulées les fibres optiques 4.

Les fibres optiques 4 qui sont représentées de façon schématique à la figure 1 par un trait mixte interrompu, sont tirées des moyens dévidoirs 12 pour passer au travers d'une tête d'extrusion 14, représentée de façon plus détaillée à la figure 2. Cette tête d'extrusion 14 qui est pour l'essentiel de structure classique, est capable de porter sous fusion une matière synthétique, généralement fournie sous la forme de granulés ou "coumpound", par chauffage à des températures très élevées.

A la sortie de la tête d'extrusion 14, la matière (référencée M à la figure 2) qui est délivrée à l'état visqueux et à très haute température (température de fusion) est forcée à se déplacer sous pression, en direction aval, autour d'une filière N qui donne à la matière M une forme d'enveloppe creuse.

Cette forme visqueuse de la matière M, obtenue à la sortie de la tête d'extrusion 14, au niveau de la filière N, est repérée à la figure 2 par la référence FV.

En aval de la tête d'extrusion 14 est disposé un conformateur 16 dans lequel sont introduites les fibres 4 ayant préalablement traversé la tête d'extrusion sous forme de nappes, de bandelettes ou de faisceaux gainés, ainsi que, de façon coaxiale à celles-ci, la matière de gainage M sous sa forme visqueuse FV.

Dans un mode de réalisation préféré de l'invention, on introduit également dans le conformateur 16, la graisse de protection V destinée à remplir le tube 2.

On se reportera désormais à la figure 2 qui représente de façon plus détaillée la tête d'extrusion 14 aussi que l'entrée du conformateur 16.

Sur cette figure, les fibres optiques 4 ont de même été représentées de façon schématique par un trait mixte interrompu.

La tête d'extrusion 14 étant de conception essentiellement classique, elle ne sera pas décrite ici de façon détaillée.

On précisera simplement que les fibres optiques 4 sont introduites depuis l'arrière dans la tête d'extrusion 14 au travers d'un guide tubulaire 18 qui s'avance jusqu'au niveau de la filière N autour de laquelle arrive la matière M, sous sa forme visqueuse FV.

Comme on le voit sur cette figure, les fibres optiques 4 passent ensuite au travers du conformateur 16 et pénètrent plus avant dans une partie de celui-ci qui est représentée sur cette figure de façon partielle et très schématique.

Le conformateur 16 comporte deux chambres 20 et 22 dans lesquelles circule un fluide, tel que de l'eau à une température T1 de l'ordre de 10 à 50°C. Plus particulièrement, cette température est maintenue entre 15 et 25°C et peut, dans certain cas, être amenée à 40°C.

Le conformateur 16 qui est aussi appelé sous le nom de bac de calibrage, est en soi de conception classique et ne sera pas non plus décrit ici de façon très détaillée.

On mentionnera simplement que la circulation d'eau à l'intérieur des chambres 20 et 22 (circulation qui est permise par une pompe à vide du type pompe à anneau d'eau, non représentée) fait naître une dépression à l'intérieur de la chambre 22, mais sous une température contrôlée T1. Cette température de refroidissement T1 assure un premier stade de solidification de la matière synthétique extrudée M.

Le conformateur 16 comporte une douille de calibrage 24 contre laquelle est plaquée par aspiration, grâce au phénomène dépressionnaire mentionné ci-dessus, la matière M qui se trouve ainsi préformée par les actions mécanique et thermique du conformateur 16, et qui prend de ce fait une forme solide référencée FS, correspondant à la forme géométrique définitive du tube, dit tube solide, référencé 2 à la figure 3.

On remarque en outre que la filière d'extrusion N comporte une tubulure 26 qui est disposée de façon coaxiale au guide tubulaire 18 et dans laquelle circulent au moins les fibres optiques 4. Dans une variante de réalisation préférée, on fait également circuler, à l'intérieur de la tubulure 26, la graisse de protection V ou "jelly" (figure 3).

La tubulure 26 isole physiquement les fibres optiques 4 ainsi que la graisse V de tout contact avec la matière de gainage M, tout au moins jusqu'à l'introduction de la matière de gainage M à l'intérieur de la douille de calibrage 24 du conformateur 16, c.a.d sur une distance qui est suffisamment grande pour permettre le préformage du tube 2 par solidification de la matière M, avant tout contact de cette matière avec les fibres 4 et la graisse de protection V.

On note en effet sur la figure 2 que la tubulure 26 pénètre, de façon coaxiale, à l'intérieur de la douille de calibrage 24 ainsi que dans le premier anneau de refroidissement formé par la chambre 20. De ce fait, la matière M avant d'entrer dans le conformateur 16 est déjà guidée intérieurement par la tubulure 26 de la filière N et commence sa solidification de façon progressive par le refroidissement dû à l'action de l'eau vaporisée à la température T1 dans les chambres 20 et 22.

La matière M ayant débuté sa solidification, elle est maintenue sous cette forme, c'est-à-dire préformée, par l'anneau de refroidissement, contre la douille de calibrage 24, ce qui conduit progressivement à la formation du tube 2 de la figure 3.

Dans la variante de réalisation représentée, la graisse de protection ou "jelly" est injectée à l'intérieur du tube 2, via la tubulure 26.

A cet effet, comme on le voit sur la figure 2, l'installation selon l'invention comporte de façon coaxiale au guide tubulaire 18 une chambre périphérique 28 pour l'amenée de la graisse de protection (ici non représentée) qui est introduite par un raccord arrière relié à un tuyau, lui-même connecté à un bac ou conteneur (non représenté). La graisse de protection est donc forcée à circuler dans la chambre annulaire 28 de façon coaxiale aux fibres optiques 4 jusqu'à une chambre de mélange 32 formée dans la tubulure 26.

On remarque donc que l'ensemble "graisse de protection-fibres optiques" ne vient en contact avec la matière M qu'une fois que cette matière a été introduite dans le conformateur 16, et plus particulièrement après son introduction à l'intérieur de la douille de calibrage 24.

On notera ici que la graisse de protection ou "jelly" peut être amenée à une température de l'ordre de 30° à 250°C selon la surlongueur qui est souhaitée sur les fibres optiques 4.

On comprend donc de ce qui vient d'être décrit qu'on a fourni une installation comportant, en aval des moyens dévidoirs 12, des moyens d'extrusion 14 de la matière de gainage M, ainsi que des moyens de calibrage 16,24 de cette matière, qui sont eux-mêmes disposés en aval des moyens d'extrusion 14. On comprend que dans cet agencement, les moyens de calibrage 16,24 sont aptes à maintenir la matière de gainage sous une forme préformée correspondant à la forme géométrique définitive du tube 2 sous sa forme solide, et cela avant et pendant que la matière M enveloppe les fibres 4 et la graisse de protection V.

En se référant désormais à la figure 1, on décrira les différentes unités de l'installation 10 selon l'invention, disposées en aval du conformateur 16. Ainsi, après le conformateur 16, est disposé un premier bac 40 à température contrôlée dans lequel circule un liquide à une température T2 supérieure ou égale à la température T1 du conformateur 16.

En aval de ce premier bac 40 est disposé un retireur principal 42 qui est formé d'une roue 43 de grand diamètre (de l'ordre de 600 à 2500 mm). A l'intérieur du retireur 42, qui forme un bac vertical de réchauffage, est maintenue une température T3 supérieure à la température T2 choisie en fonction de la surlongueur désirée sur les fibres optiques 4.

Ensuite, en aval de ce retireur principal 42 est disposé un deuxième bac de refroidissement 44 maintenu à une température T4 en général inférieure aux températures T2 et T3.

L'installation 10 comporte en outre un retireur secondaire 46 disposé sensiblement en fin de chaîne de fabrication. En outre, un régulateur de tension 48 est disposé entre le retireur principal 42 et le retireur secondaire 46 pour assurer une tension contrôlée du câble 1, entre les deux retireurs 42 et 46.

Ainsi, on comprend qu'on a fourni un procédé et une installation de fabrication d'un câble à fibre optique dans lesquels la matière M, destinée à former le tube 2 entourant les fibres optiques 4, rentre immédiatement sous sa forme visqueuse FV dans le conformateur 16 pour être préformée directement à la sortie de la tête d'extrusion 14 et pour prendre la forme géométrique définitive du tube sous sa forme solide, avant et pendant que les fibres optiques 4 et que la graisse de protection ou "jelly" V pénètrent à l'intérieur du tube 2. En outre, on constate qu'on préforme la matière M en la refroidissant à la température T1, température qui est fournie grâce à une alimentation du conformateur 16 en eau froide. De plus, après que la matière de gainage M destinée à constituer le tube 2 ait été préformée dans le conformateur 16, le câble gainé 1 est introduit dans le bac 40 dont la température contrôlée est maintenue à une température T2 supérieure ou égale à la température T1, pour que le tube 2 soit réchauffé une fois qu'il a quitté le conformateur 16.

## Revendications

1. Procédé de fabrication d'un câble à fibres optiques du type comportant un tube (2), dans lequel sont logées lesdites fibres (4), ledit procédé comportant les étapes suivantes, selon lesquelles:
a) on amène des fibres optiques (4) depuis un ou plusieurs dévidoirs (12),
b) on fait passer ces fibres (4) au travers d'une tête d'extrusion (14) fournissant, autour des fibres (4), une matière de gainage (M) extrudée à haute température dans un état visqueux sous la forme d'une enveloppe creuse (FV),
c) on fait passer, directement à la sortie de la tête d'extrusion (14), les fibres (4) et l'enveloppe creuse extrudée au travers d'un conformateur (16) comprenant une douille de calibrage (24) présentant un diamètre prédéterminé correspondant à celui du tube solide définitif (2) à former, tout en isolant les fibres (4), à partir de la sortie de la tête d'extrusion (14) et jusqu'à l'entrée au moins de la douille de calibrage (24), de tout contact avec la matière de gainage (M), ledit conformateur (16) étant agencé pour refroidir la matière de gainage (M) à une température T1 et pour guider la section de l'enveloppe creuse extrudée tout en plaquant la matière de gainage (M) contre ladite douille de calibrage (24), pour amener cette enveloppe creuse à un premier stade de solidification tout en lui faisant prendre, par calibrage, sa forme géométrique définitive (FS), correspondant à celle du tube solide définitif (2),
d) on enroule le câble (1) ainsi constitué du tube solidifié (2) et des fibres (4) autour d'un premier retireur (42), puis
e) on refroidit de nouveau le câble (1), et
f) ensuite on le passe au travers d'un second retireur (46) tout en maintenant constante la tension entre les deux retireurs (42,46).

2. Procédé selon la revendication 1, selon lequel on injecte autour des fibres (4) de la graisse de protection (V) ne venant en contact avec la face interne du tube (2) qu'après que la matière de gainage (M) formant l'enveloppe creuse extrudée ait été introduite dans le conformateur (16).

3. Procédé selon la revendication 1, selon lequel on calibre la matière de gainage (M) en la faisant passer au travers du conformateur (16) qui est un conformateur sous vide capable de plaquer la matière de gainage (M) par aspiration extérieure contre la douille de calibrage (24) qui présente ledit diamètre prédéterminé, correspondant à celui du tube solide définitif (2).

4. Procédé selon la revendication 1, selon lequel on chauffe le câble (1) depuis sa sortie du conformateur (16) jusqu'à sa sortie du premier retireur (42) à des températures de chauffage successives T2 et T3 supérieures à la température T1.

5. Procédé selon la revendication 1, selon lequel la température T1 est comprise entre 10 et 40 degrés C.

6. Procédé selon la revendication 3, selon lequel le conformateur (16) est agencé pour refroidir la matière de gainage (M) par écoulement d'un liquide de refroidissement circulant à la température T1 au travers de la douille (24) du conformateur (16).

7. Procédé selon la revendication 4, selon lequel on introduit, à la sortie du conformateur (16), le câble (1) dans un bac à température contrôlée, maintenue à la température T2 supérieure à la température T1.

8. Procédé selon la revendication 4, selon lequel le premier retireur (42) est maintenu à la température T3 qui est supérieure aux températures T1 et T2.

9. Procédé selon la revendication 1, selon lequel le câble, depuis sa sortie du conformateur (16) jusqu'à sa sortie du premier retireur (42), est maintenu à une température T2 qui est au moins égale à la température T1, et est chauffé à une température T3 qui est supérieure à la température T2.

10. Installation pour la fabrication d'un câble à fibres optiques du type comportant un tube (2) dans lequel sont logés lesdites fibres (4), cette installation comprenant :
- des moyens dévidoirs (12) capables de fournir des fibres optiques (4), par exemple sous forme de ruban, et
- des moyens d'extrusion (14) disposés en aval des moyens dévidoirs (12) et au travers desquels sont destinées à être passées lesdites fibres (4), ces moyens d'extrusion (14) étant capables de fournir, autour de fibres (4), une matière de gainage (M) extrudée à haute température dans un état visqueux sous la forme d'une enveloppe creuse (FV),
caractérisée en ce qu'elle comporte en outre un conformateur (16) disposé en aval des moyens d'extrusion (14), comprenant une douille de calibrage (24) présentant un diamètre prédéterminé, correspondant à celui du tube solide définitif à former, ce conformateur (16) étant agencé pour refroidir la matière extrudée (M) à une température T1 tout en guidant la section de l'enveloppe creuse extrudée et en plaquant simultanément la matière de gainage (M) contre ladite douille de calibrage (24), pour amener cette enveloppe à un premier stade de solidification tout en lui faisant prendre, par calibrage, sa forme géométrique définitive (FS), correspondant à celle du tube solide definitif (2); et des moyens (26) pour isoler les fibres (4), à partir de la sortie de la tête d'extrusion (14) et jusqu'à l'entrée au moins de la douille de calibrage (24), de tout contact avec la matière de gainage (M).

11. Installation selon la revendication 10, caractérisée en ce la douille de calibrage (24) est disposée à la sortie des moyens d'extrusion (14).

12. Installation selon la revendication 11, caractérisée en ce que le conformateur (16) est un conformateur sous vide capable de plaquer par l'extérieur la matière de gainage (M) à la sortie des moyens d'extrusion (14), contre la douille de calibrage (24).

13. Installation selon l'une des revendications 10 à 11, caractérisée en ce qu'elle comporte un dispositif de mise en circulation d'un liquide de refroidissement à l'intérieur du conformateur (16), autour de la douille de calibrage (24).

14. Installation selon l'une des revendications 10 à 13, caractérisé en ce que lesdits moyens d'isolation comportent une tubulure (26) destinée à amener à la sortie des moyens d'extrusion (14), les fibres (4) et une graisse de protection (V) devant remplir le tube (2), cette tubulure (26) qui pénètre à l'intérieur de la douille de calibrage (24) étant apte à maintenir la matière de gainage (M) isolée à la fois des fibres (4) et de ladite graisse de protection (V), lors de l'entrée de la matière (M) dans la douille de calibrage (24), pour éviter tout contact de cette matière (M) avec les fibres (4) et la graisse (V) avant le refroidissement de ladite matière (M).

## Patentansprüche

1. Verfahren zum Herstellen eines Lichtleitfaser-Kabels in einer einen Mantel (2), in welchem die Fasem (4) angeordnet sind, umfassenden Ausführung, wobei das Verfahren die folgenden Schritte umfaßt, nach denen:
a) man die Lichtleiffasem (4) einer oder mehreren Haspeln (12) entnimmt,
b) man diese Fasern (4) durch einen Extrudierkopf (14) führt, welcher um die Fasem (4) herum eine bei hoher Temperatur in viskosem Zustand in die Form eines hohlen Mantels (FV) extrudierte Hüllmasse (M) anbringt,
c) man die Fasem (4) und den extrudierten hohlen Mantel direkt am Ausgang des Extrudierkopfs (14) durch eine Gestaltungseinrichtung (16) führt, welche einen Kalibrierring (24) mit einem vorbestimmten, dem des zu formenden, festen, endgültigen Mantels (2) entsprechenden Durchmesser umfaßt, wobei die Fasem (4) vom Ausgang des Extrudierkopfs (14) bis zum Eintritt mindestens des Kalibrierrings (24) gänzlich vom Kontakt mit der Hüllmasse (M) isoliert sind, wobei die Gestaltungseinrichtung (16) zum Abkühlen der Hüllmasse (M) auf eine Temperatur T1 und zum Führen des extrudierten Abschnitts des hohlen Mantels unter Anlage an den Kalibrierring (24) ausgebildet ist, um den hohlen Mantel in ein erstes Stadium der Verfestigung zu bringen und ihn so durch Kalibrierung seine endgültige geometrische Form (FS), welche derjenigen des endgültigen, festen Mantels (2) entspricht, annehmen zu lassen,
d) man das so aus dem verfestigten Mantel (2) und den Fasern (4) bestehende Kabel (1) um eine erste Streckeinrichtung (42) wickelt, dann
e) das Kabel (1) erneut abkühlt, und
f) man es anschließend durch eine zweite Streckeinrichtung (46) unter konstanter Beibehaltung der Spannung zwischen den beiden Streckeinrichtungen (42, 46) führt.

2. Verfahren nach Anspruch 1, gemäß welchem man um die Fasem (4) herum Schutzschmiermittel (V) injiziert, welches mit der Innenseite des Mantels (2) nicht vor Einführen der den hohlen Mantel bildenden extrudierten Hüllmasse (M) in die Gestaltungseinrichtung (16) in Kontakt kommt.

3. Verfahren nach Anspruch 1, gemäß welchem man die Hüllmasse (M) während des Durchführens durch die Gestaltungseinrichtung (16), die eine Vakuum-Gestaltungseinrichtung ist und unter äußerem Ansaugen zum Andrücken der Hüllmasse (M) an den Kalibrierring (24), der den vorbestimmten und dem Durchmesser des endgültigen, festen Mantels (2) entsprechenden Durchmesser aufweist, geeignet ist, kalibriert.

4. Verfahren nach Anspruch 1, gemäß welchem man das Kabel (1) von seinem Austritt aus der Gestaltungseinrichtung (16) bis zu seinem Verlassen der ersten Streckeinrichtung (42) auf aufeinanderfolgende Aufheizungstemperaturen T2 und T3, die höher sind als die Temperatur T1, erwärmt.

5. Verfahren nach Anspruch 1, gemäß welchem die Temperatur T1 zwischen 10 und 40 Grad Celsius beträgt.

6. Verfahren nach Anspruch 3, gemäß welchem die Gestaltungseinrichtung (16) zum Abkühlen der Hüllmasse (M) durch Fließen einer zirkulierenden Kühlflüssigkeit der Temperatur T1 durch den Ring (24) der Gestaltungseinrichtung (16) ausgebildet ist.

7. Verfahren nach Anspruch 4, gemäß welchem man am Ausgang der Gestaltungseinrichtung (16) das Kabel (1) in ein Bad mit kontrollierter Temperatur einführt, die auf der Temperatur T2 gehalten wird, welche höher als die Temperatur T1 ist.

8. Verfahren nach Anspruch 4, gemäß welchem die erste Streckeinrichtung (42) auf der Temperatur T3 gehalten wird, die höher als die Temperaturen T1 und T2 ist.

9. Verfahren nach Anspruch 1, gemäß welchem das Kabel von seinem Austritt aus der Gestaltungseinrichtung (16) bis zu seinem Verlassen der ersten Streckeinrichtung (42) auf einer Temperatur T2, die mindestens gleich hoch wie Temperatur T1 ist, gehalten und auf eine Temperatur T3 erhitzt wird, die höher ist als die Temperatur T2.

10. Vorrichtung zur Herstellung eines Lichtleitfaser-Kabels in einer einen Mantel (2), in welchem die Fasern (4) angeordnet sind, umfassenden Ausführung, umfassend:
- zur beispielsweise bandförmigen Abgabe von optischen Fasem (4) geeignete Haspeln (12), und
- abgabeseitig der Haspeln (12) angebrachte Extrudiermittel (14), durch welche die Fasern (4) durchzuführen sind, wobei diese Extrudiermittel (14) geeignet sind, um die Fasem (4) herum eine unter hoher Temperatur in viskosem Zustand in die Form eines hohlen Mantels (FV) extrudierte Hüllmasse (M) anzubringen,
dadurch gekennzeichnet, daß sie zudem eine ausgangsseitig der Extrudiermittel (14) angebrachte Gestaltungseinrichtung (16) umfaßt, umfassend einen Kalibrierring (24) mit einem vorbestimmten, dem des zu formenden, festen, endgültigen Mantels (2) entsprechenden Durchmesser, wobei die Gestaltungseinrichtung (16) zum Abkühlen der extrudierten Masse (M) auf eine Temperatur T1 ausgebildet ist, und zwar unter Führen des extrudierten Abschnitts des hohlen Mantels und unter gleichzeitigem Anpressen der Hüllmasse (M) an den Kalibrierring (24), um diesen Mantel in ein erstes Verfestigungsstadium zu bringen und ihn so durch Kalibrieren seine endgültige geometrische Form (FS) annehmen zu lassen, welche derjenigen des endgültigen festen Mantels (2) entspricht; und Mittel (26), um die Fasern (4) vom Ausgang des Extrudierkopfs (14) bis zum Eintritt mindestens des Kalibrierrings (24) gänzlich vom Kontakt mit der Hüllmasse (M) zu isolieren.

11. Vorrichtung nach Anspruch 10, dadurch gekennzeichnet, daß der Kalibrierring (24) am Ausgang der Extrudiermittel (14) angeordnet ist.

12. Vorrichtung nach Anspruch 11, dadurch gekennzeichnet, daß die Gestaltungseinrichtung (16) eine zum Andrücken der Außenseite der Hüllmasse (M) an den Kalibrierring (24) am Ausgang der Extrudiermittel (14) geeignete Vakuum-Gestaltungseinrichtung ist.

13. Vorrichtung nach einem der Ansprüche 10 bis 11, dadurch gekennzeichnet, daß sie eine Einrichtung zum Umwälzen einer Kühlflüssigkeit im Inneren der Gestaltungseinrichtung (16) um den Kalibrierring (24) umfaßt.

14. Vorrichtung nach einem der Ansprüche 10 bis 13, dadurch gekennzeichnet, daß die Mittel zum Isolieren einen Rohrstutzen (26) umfassen, der dazu bestimmt ist, die Fasem (4) und ein Schutzschmiermittel (V) vor Ausfüllen des Mantels (2) dem Ausgang der Extrudiermittel (14) zuzuführen, wobei der in das Innere des Kalibrierrings (24) eindringende Rohrstutzen (26) dazu geeignet ist, die Hüllmasse während des Eintritts der Masse (M) in den Kalibrierring (24) zugleich von den Fasern (4) und dem Schutzschmiermittel (V) getrennt zu halten, um jeglichen Kontakt zwischen der Masse (M) einerseits und den Fasem (4) und dem Schmiermittel (V) andererseits vor der Abkühlung der Masse (M) zu vermeiden.

## Claims

1. Method for manufacturing an optical fiber cable of the type including a tube (2) in which said fibers (4) are housed, said method including the following steps wherein :
a) optical fibers (4) are brought from one or several pay-out reels (12),
b) such fibers (4) are passed through an extrusion head (14) supplying around the fibers (4) a sheathing material (M) which is extruded in a viscous state at a high temperature into the form of a hollow envelope (FV),
c) directly at the exit of the extrusion head (14), the fibers (4) and the extruded hollow envelope are passed through a jig (16) which includes a calibration socket (24) having a predetermined diameter, corresponding to that of the definitive solid tube (2) to be formed, while the fibers (4) are isolated from any contact with the sheathing material (M) on the path from the exit from the extrusion head (14) at least to the input into the calibration socket (24), said jig (16) being arranged for cooling the sheathing material (M) to a temperature T1 and for guiding the cross section of the hollow extruded envelope while applying the sheathing material (M) against said calibration socket (24) so as to bring this hollow envelope to a first stage of solidification while causing it to assume by calibration its definitive geometric form (FS), corresponding to that of the definitive solid tube (2),
d) the cable (1) thus made up from the solid tube (2) and the fibers (4) is rolled up around a first draw-in reel (42), then
e) the cable (1) is cooled again, and
f) then it is passed through a second draw-in reel (46) while the tension between the two draw-in reels (42, 46) is maintaining constant.

2. Method according to claim 1, wherein protection grease (V) is injected around the fibers (4), said grease coming into contact with the inner face of the tube (2) only after the sheathing material (M) forming the hollow extruded envelope has been introduced into the jig (16).

3. Method according to claim 1, wherein the sheathing material (M) is calibrated by causing it to pass through the jig (16) which is a jig under vacuum capable of applying the sheathing material (M) by outer suction against the calibration socket (24) exhibiting said predetermined diameter, corresponding to that of the definitive solid tube (2).

4. Method according to claim 1, wherein the cable (1) is heated following its exit from the jig (16) until its exit from the first draw-in reel (42) to successive heating temperatures T2 and T3 greater than said temperature T1.

5. Method according to claim 1, wherein the temperature T1 is comprised between 10 and 40°C.

6. Method according to claim 3, wherein the jig (16) is arranged for cooling the sheathing material (M) by a flow of a cooling liquid circulating at said temperature T1 through the socket (24) of the jig (16).

7. Method according to claim 4, wherein, at the exit of the jig (16), the cable (1) is introduced into a container at a controlled temperature, which is maintained at said temperature T2 greater than said temperature T1.

8. Method according to claim 4, wherein the first draw-in reel (42) is maintained at said temperature T3 which is greater than said temperatures T1 and T2.

9. Method according to claim 1, wherein the cable is maintained at a temperature T2 greater than or equal to said temperature T1, following its exit from the jig (16) until its exit from the first draw-in wheel (42), and is heated to a temperature T3 greater than said temperature T2.

10. Apparatus for manufacturing an optical fiber cable of the type including a tube (2) in which said fibers (4) are housed, such apparatus comprising :
- pay-out means (12) capable of supplying optical fibers (4), for example under ribbon form, and
- extrusion means (14) arranged after the pay-out means (12) and through which said fibers (4) will pass, such extrusion means (14) being capable of supplying around the fibers (4) a sheathing material (M) which is extruded in a viscous state at a high temperature into the the form of a hollow envelope (FV),
characterized in that it further includes a jig (16) arranged downstream from the extrusion means (14), including a calibration socket (24) having a predetermined diameter, corresponding to that of the definitive solid tube to be formed, such jig (16) being arranged for cooling the extruded material (M) to a temperature T1 while guiding the cross section of the hollow extruded envelope and simultaneously applying the sheathing material (M) against said calibration socket (24), so as to bring said envelope to a first stage of solidification while causing it to assume by calibration its definitive geometric form (FS), corresponding to that of the definitive solid tube (2); and means (26) for isolating the fibers (4) from any contact with the sheathing material (M) on the path from the exit from the extrusion head (14) at least to the input into the calibration socket (24).

11. Apparatus according to claim 10, characterized in that the calibration socket (24) is arranged at the exit of the extrusion means (14).

12. Apparatus according to claim 11, characterized in that the jig (16) is a jig under vacuum capable of applying by the exterior the sheathing material (M) against the calibration socket (24) at the exit of the extrusion means (14).

13. Apparatus according to any one of claims 10 to 11, characterized in that it includes an arrangement for putting a cooling liquid into circulation in the interior of the jig (16) around the calibration socket (24).

14. Apparatus according to any one of claims 10 to 13, characterized in that said isolating means include a feed neck (26) intended to bring the fibers (4) and a protecting grease (V) having to fill the tube (2) to the exit of the extrusion means (14), such feed neck (26), which penetrates into the interior of the calibration socket (24), being capable of maintaining the sheathing material (M) isolated at the same time from the fibers (4) and said protecting grease (V) at the time of entry of the material (M) into the calibration socket (24) so as to avoid any contact of such material (M) with the fibers (4) and the grease (V) before the cooling of said material (M).
